# EUROPEAN PATENT APPLICATION

(11) **EP 4 538 835 A1**
(43) Date of publication of application: **16.04.2025**
(21) Application number: 24205233.0
(22) Date of filing: 08.10.2024
(51) Int. Cl.: G06F 3/01

(54) **CONTROL METHOD, MIXED REALITY SYSTEM, MIXED REALITY DEVICE, AND STORAGE MEDIUM**

(30) Priority: 11.10.2023 JP 2023176263
(71) Applicant: Kabushiki Kaisha Toshiba, Tokyo 105-0023 (JP)
(72) Inventor: YAMASHITA, Ren, Tokyo 105-0023 (JP); AOKI, Yusuke, Tokyo 105-0023 (JP); YOSHII, Takanori, Tokyo 105-0023 (JP); HAYASHI, Kyotaro, Tokyo 105-0023 (JP); NAKAMURA, Hiroaki, Tokyo 105-0023 (JP); HIRAHARA, Yoshiyuki, Tokyo 105-0023 (JP); FUKUDA, Masamitsu, Tokyo 105-0023 (JP); KOZAKAI, Takafumi, Tokyo 105-0023 (JP); NAMIOKA, Yasuo, Tokyo 105-0023 (JP)
(74) Representative: Hoffmann Eitle

(57) **Abstract**

According to one embodiment, a control method includes causing a first mixed reality device (100a) to display a first virtual object (301) at a first fastening location (201). The control method includes causing a second mixed reality device (100b) to display a second virtual object (305) at a second fastening location (205). The control method includes, when a screw is determined to have been turned at the first fastening location and a screw is determined to have been turned at the second fastening location, causing the first mixed reality device to display a third virtual object (302) at a third fastening location (202), and causing the second mixed reality device to display a fourth virtual object (306) at a fourth fastening location (206).

## Description

### FIELD

Embodiments of the invention generally relate to a control method, a mixed reality system, a mixed reality device, and a storage medium.

### BACKGROUND

Conventionally, a mixed reality device is used to perform a task efficiently. The mixed reality device can display a virtual space to overlap real space, and can provide various information to a worker. The worker can perform the task more efficiently by referring to the information displayed by the mixed reality device. Technology that can support a task performed by multiple workers using mixed reality devices is desirable.

### BRIEF DESCRIPTION OF THE DRAWINGS

FIG. 1 is a schematic view illustrating a mixed reality device according to an embodiment;
FIG. 2 is a schematic view showing a configuration of a mixed reality system according to the embodiment;
FIG. 3 is a schematic view illustrating a work site;
FIG. 4 is a schematic view illustrating the work site;
FIG. 5 is a schematic view showing an output example of the mixed reality device according to the embodiment;
FIG. 6 is a schematic view showing an output example of the mixed reality device according to the embodiment;
FIG. 7 is a schematic view illustrating a task;
FIG. 8 is a schematic view showing an example of a tool;
FIGS. 9A and 9B are schematic views showing a simultaneous task;
FIGS. 10A and 10B are schematic views showing an alternating task;
FIGS. 11A and 11B are schematic views showing the alternating task;
FIG. 12 is a schematic view showing an arbitrary task;
FIG. 13 is a flowchart showing a processing method according to the embodiment;
FIG. 14 is a flowchart showing a control method of the mixed reality devices in the simultaneous task;
FIGS. 15A and 15B are schematic views showing output examples from the mixed reality device in the simultaneous task;
FIGS. 16A and 16B are schematic views showing output examples from the mixed reality device in the simultaneous task;
FIG. 17 is a flowchart showing a control method of the mixed reality devices in the alternating task;
FIGS. 18A and 18B are schematic views showing output examples from the mixed reality device in the alternating task;
FIGS. 19A and 19B are schematic views showing output examples from the mixed reality device in the alternating task;
FIG. 20 is a flowchart showing a control method of the mixed reality devices in the arbitrary task;
FIGS. 21A and 21B are schematic views showing output examples from the mixed reality device in the arbitrary task;
FIG. 22 is a schematic view illustrating data used according to the embodiment; and
FIG. 23 is a schematic view showing a hardware configuration.

### DETAILED DESCRIPTION

According to one embodiment, a control method includes causing a first mixed reality device to display a first virtual object at a first fastening location. The control method includes causing a second mixed reality device to display a second virtual object at a second fastening location. The control method includes, when a screw is determined to have been turned at the first fastening location and a screw is determined to have been turned at the second fastening location, causing the first mixed reality device to display a third virtual object at a third fastening location, and causing the second mixed reality device to display a fourth virtual object at a fourth fastening location.

Embodiments of the invention will now be described with reference to the drawings. The drawings are schematic or conceptual; and the relationships between the thicknesses and widths of portions, the proportions of sizes between portions, etc., are not necessarily the same as the actual values thereof. The dimensions and/or the proportions may be illustrated differently between the drawings, even in the case where the same portion is illustrated. In the drawings and the specification of the application, components similar to those described thereinabove are marked with like reference numerals, and a detailed description is omitted as appropriate.

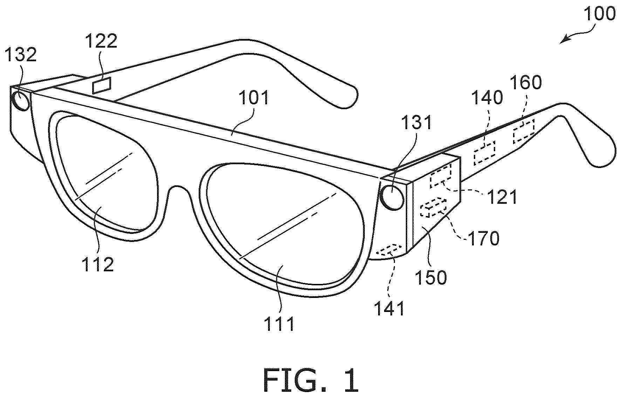

FIG. 1 is a schematic view illustrating a mixed reality device according to an embodiment.

The embodiment of the invention relates to a mixed reality device (a MR device). For example, as shown in FIG. 1, the MR device 100 according to the embodiment includes a frame 101, a lens 111, a lens 112, a projection device 121, a projection device 122, an image camera 131, a depth camera 132, a sensor 140, a microphone 141, a processing device 150, a battery 160, and a storage device 170.

In the illustrated example, the MR device 100 is a binocular head mounted display. Two lenses, i.e., the lens 111 and the lens 112, are fit into the frame 101. The projection device 121 and the projection device 122 respectively project information onto the lenses 111 and 112.

The projection device 121 and the projection device 122 display a recognition result of a body of a worker, a virtual object, etc., on the lenses 111 and 112. Only one of the projection device 121 or the projection device 122 may be included, and information may be displayed on only one of the lens 111 or the lens 112.

The lens 111 and the lens 112 are light-transmissive. The wearer of the MR device 100 can visually recognize reality via the lenses 111 and 112. The wearer of the MR device 100 also can visually recognize information projected onto the lenses 111 and 112 by the projection devices 121 and 122. The information (the virtual space) is displayed to overlap real space by being projected by the projection devices 121 and 122.

The image camera 131 detects visible light and obtains a two-dimensional image. The depth camera 132 irradiates infrared light and obtains a depth image based on the reflected infrared light. The sensor 140 is a six-axis detection sensor and is configured to detect angular velocities in three axes and accelerations in three axes. The microphone 141 accepts an audio input.

The processing device 150 controls components of the MR device 100. For example, the processing device 150 controls the display by the projection devices 121 and 122. The processing device 150 detects movement of the visual field based on a detection result of the sensor 140. The processing device 150 changes the display by the projection devices 121 and 122 according to the movement of the visual field. The processing device 150 also is configured to perform various processing by using data obtained from the image camera 131 and the depth camera 132, data of the storage device 170, etc.

The battery 160 supplies power necessary for the operations to the components of the MR device 100. The storage device 170 stores data necessary for the processing of the processing device 150, data obtained by the processing of the processing device 150, etc. The storage device 170 may be located outside the MR device 100, and may communicate with the processing device 150.

The MR device according to the embodiment is not limited to the illustrated example, and may be a monocular head mounted display. The MR device may be an eyeglasses-type as illustrated, or may be a helmet-type.

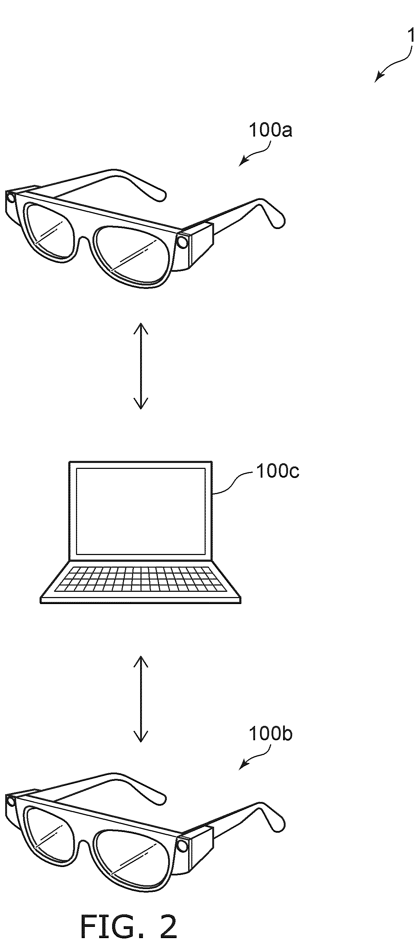

FIG. 2 is a schematic view showing a configuration of the mixed reality system according to the embodiment.

As shown in FIG. 2, the mixed reality system (the MR system) 1 according to the embodiment includes multiple MR devices, i.e., a MR device 100a and a MR device 100b, and a processing device 100c. The MR device 100a and the MR device 100b communicate data with each other via the processing device 100c (a host computer). Or, the data may be directly communicated between the MR device 100a and the MR device 100b. In the illustrated example, the MR system 1 includes two MR devices. The MR system 1 may include three or more MR devices. In the following description, when the MR device 100a and the MR device 100b are not particularly differentiated, at least one of the MR device 100a or the MR device 100b is called the MR device 100.

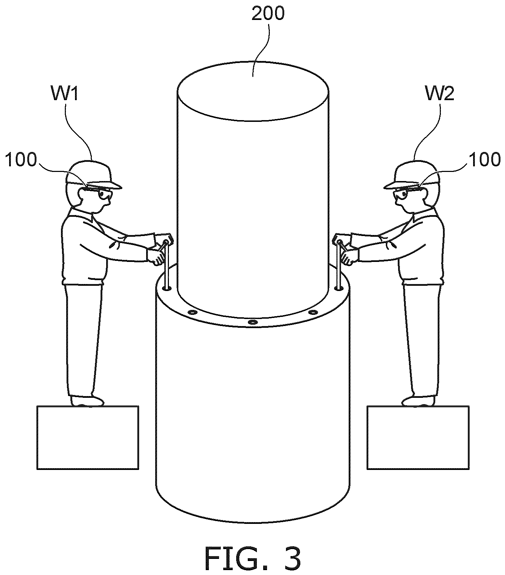

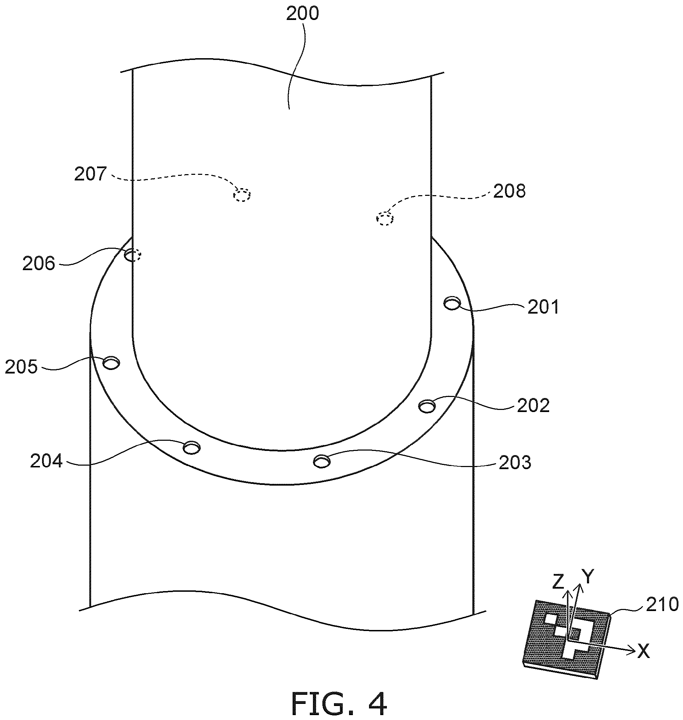

FIGS. 3 and 4 are schematic views illustrating a work site.

In the example shown in FIG. 3, workers W1 and W2 are performing tasks on an article 200. The workers W1 and W2 respectively wear the MR devices 100 and perform screw-tightening. As shown in FIG. 4, the article 200 is a cylindrical member, and includes fastening locations 201 to 208. The workers W1 and W2 use wrenches and extension bars to fasten screws respectively at the fastening locations 201 to 208.

As shown in FIG. 4, a marker 210 is located proximate to the task object. The marker 210 is an AR marker. As described below, the marker 210 provided for setting an origin of a three-dimensional coordinate system. Instead of the AR marker, a one-dimensional code (a barcode), a two-dimensional code (a QR code (registered trademark)), etc., may be used as the marker 210. Or, the origin may be indicated by a hand gesture instead of a marker. The processing device 150 sets the three-dimensional coordinate system by using multiple points indicated by the hand gesture as a reference.

When starting the task, the image camera 131 and the depth camera 132 image the marker 210. The processing device 150 recognizes the marker 210 based on the captured image. The processing device 150 sets the three-dimensional coordinate system by using the position and orientation of the marker 210 as a reference.

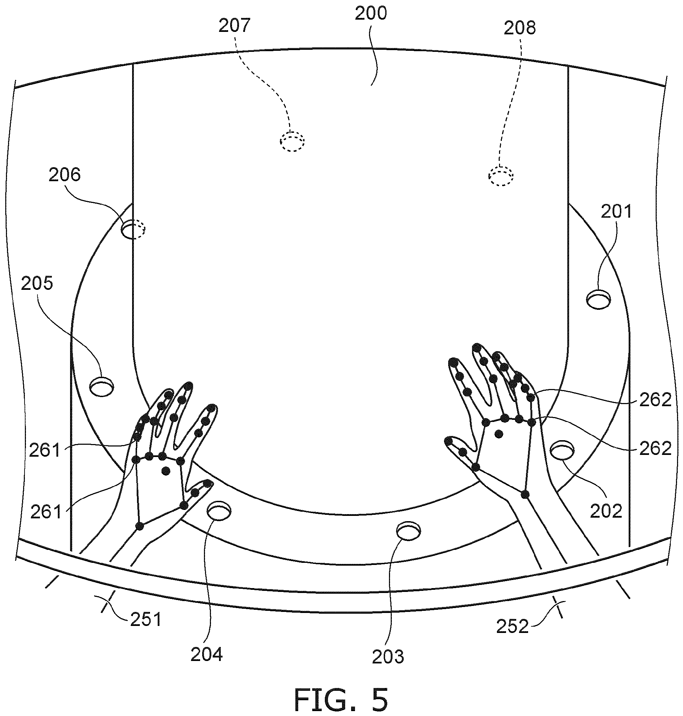

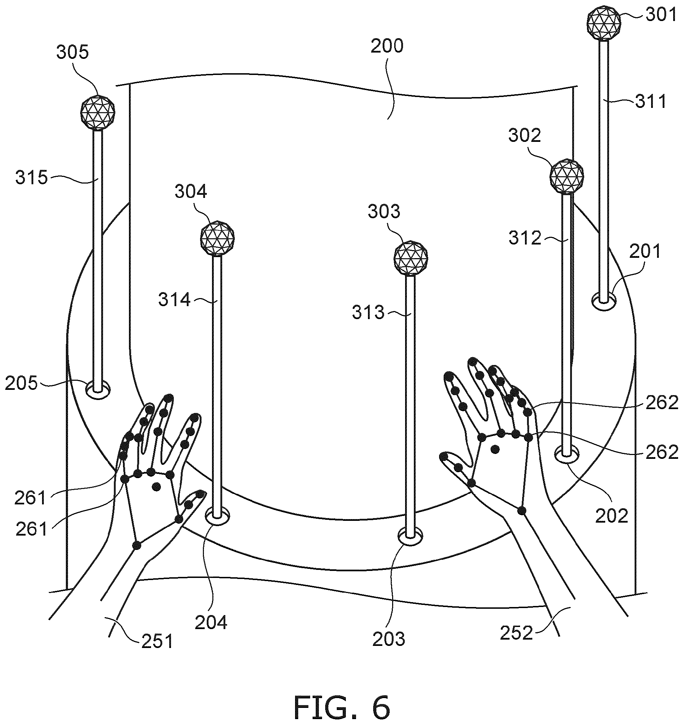

FIGS. 5 and 6 are schematic views showing output examples of the mixed reality device according to the embodiment.

In the task, the image camera 131 and the depth camera 132 image the article 200, a left hand 251 of the worker, and a right hand 252 of the worker. The processing device 150 uses hand tracking to recognize the left and right hands 251 and 252 based on the captured image. The processing device 150 may cause the projection devices 121 and 122 to display the recognition result on the lenses 111 and 112. Hereinafter, the processing device using the projection device to display information on the lens also is called simply "the processing device displaying information".

For example, as shown in FIG. 5, the processing device 150 displays the recognition result of the left hand 251 and the recognition result of the right hand 252 to overlap the hands in real space. In the illustrated example, multiple virtual objects 261 and multiple virtual objects 262, which are virtual, are displayed as the recognition results of the left and right hands 251 and 252. The multiple virtual objects 261 respectively indicate multiple joints of the left hand 251. The multiple virtual objects 262 respectively indicate multiple joints of the right hand 252. Instead of joints, virtual objects (meshes) that represent the surface shape of the left hand 251 and the surface shape of the right hand 252 may be displayed.

When the left hand 251 and the right hand 252 are recognized, the processing device 150 measures the coordinates of the hands. Specifically, each hand includes multiple joints such as a DIP joint, a PIP joint, an MP joint, a CM joint, etc. The coordinate of any of these joints is used as the coordinate of the hand. The centroid position of multiple joints may be used as the coordinate of the hand. Or, the center coordinate of the entire hand may be used as the coordinate of the hand.

As shown in FIG. 6, the processing device 150 displays virtual objects 301 to 305 and virtual objects 311 to 315. The virtual objects 311 to 315 are displayed respectively between the fastening locations 201 to 205 and the virtual objects 301 to 305. The virtual objects 311 to 315 respectively show which of the fastening locations correspond to the virtual objects 301 to 305. The positions at which the virtual objects 301 to 305 and 311 to 315 are displayed are preregistered using a coordinate system based on the origin of the marker 210.

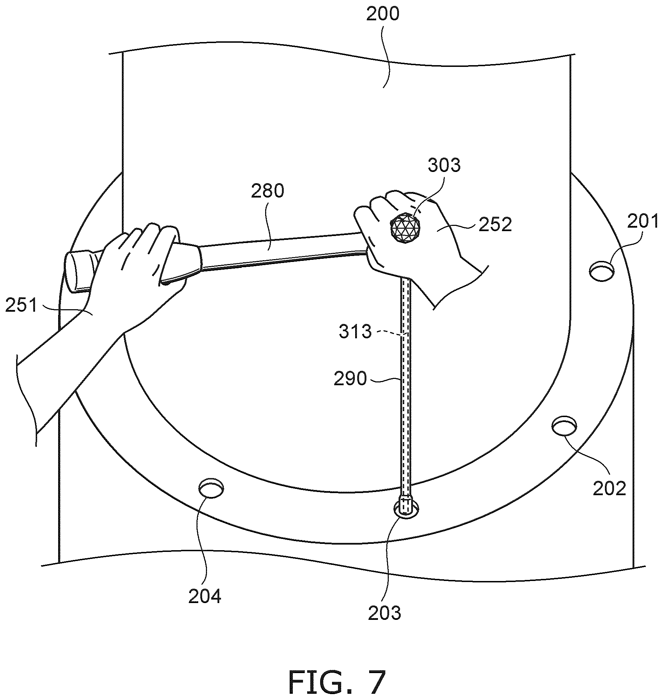

FIG. 7 is a schematic view illustrating a task.

For example, as shown in FIG. 7, a wrench 280 and an extension bar 290 are used to turn a screw at a fastening location. As an example, when tightening a screw at a fastening location 203, the worker places a screw in the screw hole of the fastening location 203. The worker causes one end of the extension bar 290 to engage the screw. The worker causes the head of the wrench 280 to engage the other end of the extension bar 290. The worker presses the head of the wrench 280 with one hand, and grips the grip of the wrench 280 with the other hand. By turning the wrench 280, the screw is tightened at the fastening location 203 via the extension bar 290.

At this time, the worker disposes the extension bar 290 so that the extension bar 290 approaches or contacts the virtual object 313. Also, the worker grips the head of the wrench 280 so that the hand contacts the virtual object 303. By displaying the virtual object, the worker can easily ascertain the positions at which the tool and the hand are to be located when turning the screw at the fastening location 203. The work efficiency can be increased thereby.

In the illustrated example, the virtual objects 301 to 305 are spherical; and the virtual objects 311 to 315 are rod-shaped. The shapes of the virtual objects are not limited to the examples as long as the worker can visually recognize the virtual objects. For example, the virtual objects 301 to 305 may be cubic; and the virtual objects 311 to 315 may be wire-shaped. Virtual objects similar to the virtual objects 301 to 305 and the virtual objects 311 to 315 also are displayed for fastening locations 206 to 208 not shown in FIG. 6.

After the virtual object is displayed, the processing device 150 may determine whether or not a prescribed object contacts the virtual objects 301 to 305. For example, the processing device 150 determines whether or not a hand contacts the virtual object. Specifically, the processing device 150 calculates the distances between the coordinate of the hand and the virtual objects 301 to 305. When one distance is less than a preset threshold, the processing device 150 determines that the hand contacts the virtual object. As an example in FIG. 6, the diameters of the virtual objects 301 to 305 (spheres) correspond to the thresholds. The sphere is the range in which the hand is determined to contact the virtual object.

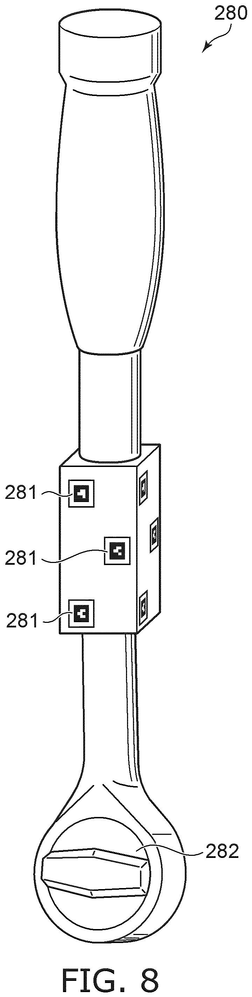

FIG. 8 is a schematic view showing an example of a tool.

The processing device 150 may determine whether or not the tool contacts the virtual objects 301 to 305. For example, as shown in FIG. 8, multiple markers 281 are mounted to the wrench 280. The processing device 150 recognizes the multiple markers 281 based on an image that is imaged by the image camera 131. The processing device 150 measures the coordinates of the markers 281. The positional relationships between the multiple markers 281 and a head 282 of the wrench 280 are preregistered. The processing device 150 calculates the coordinate of the head 282 based on the coordinates of at least three markers 281 that are recognized and the preregistered positional relationships. The processing device 150 calculates the distances between the coordinate of the head 282 and the virtual objects 301 to 305. When one of the distances is less than a preset threshold, the processing device 150 determines that the wrench 280 contacts that virtual object.

When the hand or the tool contacts one of the virtual objects 301 to 305, it is determined that a screw is being turned at the fastening location corresponding to the one of the virtual objects 301 to 305. In the example shown in FIG. 7, due to the contact between the hand and the virtual object 303, it is determined that the task is being performed at the fastening location 203 corresponding to the virtual object 303. Hereinafter, the fastening location among one or more fastening locations at which the task is determined to be performed based on contact between a virtual object and a prescribed object is called the "task location". When the task location is determined, the processing device 150 may record that the screw is turned at the task location. The task record is automatically generated thereby.

The tool that is used may be a digital tool that can detect torque. In such a case, the processing device 150 receives the detected torque from the tool. The torque (the threshold) that is necessary for the fastening may be preset, and the tool may refer to the necessary torque. The tool determines whether or not the necessary torque is detected, and transmits the determination result to the processing device 150. The tool also can transmit the rotation angle, the time at which the torque was detected, etc., to the processing device 150. The processing device 150 associates the data received from the tool with data related to the task location. A more detailed task record is automatically generated thereby.

According to the embodiment, the multiple MR devices 100 collaborate to control the displays of the virtual objects. The tasks that are performed are mainly classified into the three tasks of "simultaneous task", "alternating task", and "arbitrary task". The MR device 100 switches the display method of the virtual object according to the task to be performed.

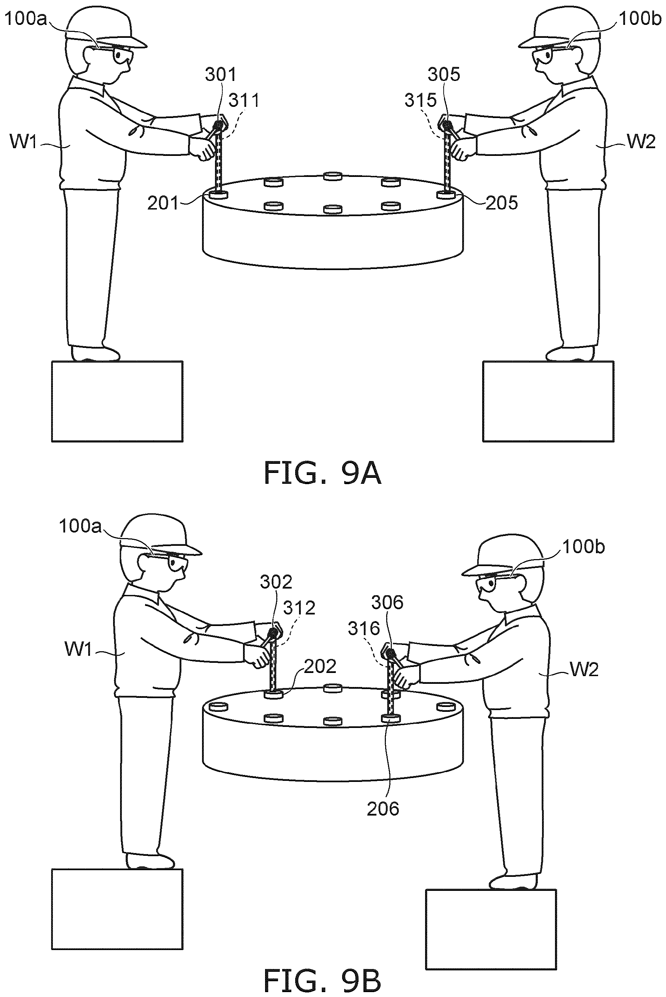

FIGS. 9A and 9B are schematic views showing a simultaneous task.

In the simultaneous task, multiple workers respectively turn screws simultaneously at multiple fastening locations. Here, "simultaneous" means that at least a part of the period in which one worker turns a screw and at least a part of the period in which another worker turns a screw overlap.

In the example shown in FIG. 9A, the worker W1 wears the MR device 100a. The worker W2 wears the MR device 100b. The worker W2 is positioned at the side opposite to the worker W1 with respect to the article 200. In this state, the MR device 100a displays the virtual objects 301 and 311 at the fastening location 201. The MR device 100b displays the virtual objects 305 and 315 at the fastening location 205. The MR device 100a does not display the virtual objects 305 and 315; and the MR device 100b does not display the virtual objects 301 and 311.

The worker W1 starts the task at the fastening location 201 according to the display of the MR device 100a. The worker W2 starts the task at the fastening location 205 according to the display of the MR device 100b. When the hand or tool of the worker W1 contacts the virtual object 301, the MR device 100a determines that the task is performed at the fastening location 201. When the hand or tool of the worker W2 contacts the virtual object 305, the MR device 100b determines that the task is performed at the fastening location 205. The MR device 100a transmits the determination result related to the fastening location 201 to the MR device 100b. The MR device 100b transmits the determination result related to the fastening location 205 to the MR device 100a.

Subsequently, when it is determined that the screws are turned at the fastening locations 201 and 205, the MR devices 100a and 100b display the virtual objects at the next fastening locations. For example, as shown in FIG. 9B, the MR device 100a displays the virtual objects 302 and 312 at the fastening location 202. The MR device 100b displays the virtual object 306 and a virtual object 316 at the fastening location 206. The MR device 100a does not display the virtual objects 306 and 316; and the MR device 100b does not display the virtual objects 302 and 312. The workers W1 and W2 start the tasks respectively at the fastening locations 202 and 206.

In the simultaneous task, the display of the MR device 100a and the display of the MR device 100b guide the workers W1 and W2 to simultaneously turned the screws of the article 200. In the illustrated example, the workers W1 and W2 are guided to simultaneously turn the screws at opposite positions of the article 200.

For example, the MR device 100 refers to a preset sequence of the task for the fastening locations 201 to 208. The MR device 100 sequentially displays the virtual objects at the fastening locations according to the sequence of the task. The priority of the task at each fastening location may be preset. In such a case, the MR device 100 sequentially displays the virtual objects at the fastening locations according to the priorities. For example, the MR device 100 sequentially displays the virtual objects so that the screws are turned in order from the fastening locations having higher priorities.

One of the MR device 100a or 100b may notify the state of the task of the wearer of the other of the MR device 100a or the MR device 100b by using a display, a voice, a vibration, etc. For example, when the prescribed object contacts the virtual object, the MR device 100 determines that the worker is in a "preparation completion" state. After preparation completion is determined, when a torque that is greater than a threshold is detected by the tool, the MR device 100 determines that the worker is in a "task completion" state.

For example, when preparation completion or task completion is determined for the MR device 100a, the MR device 100a notifies the worker W1 of the determination result and transmits the determination result to the MR device 100b. The MR device 100b notifies the worker W2 of the determination result of the MR device 100a. Similarly, when preparation completion or task completion is determined for the MR device 100b, the MR device 100b notifies the worker W2 of the determination result and transmits the determination result to the MR device 100a. The MR device 100a notifies the worker W1 of the determination result of the MR device 100b. As a result, the workers W1 and W2 can ascertain each other's states.

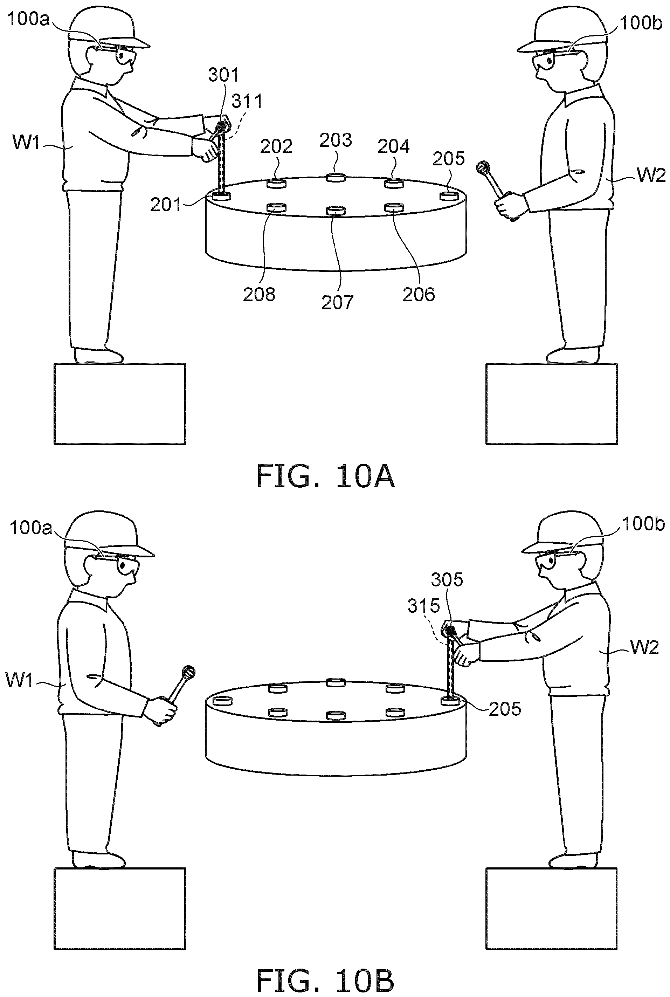

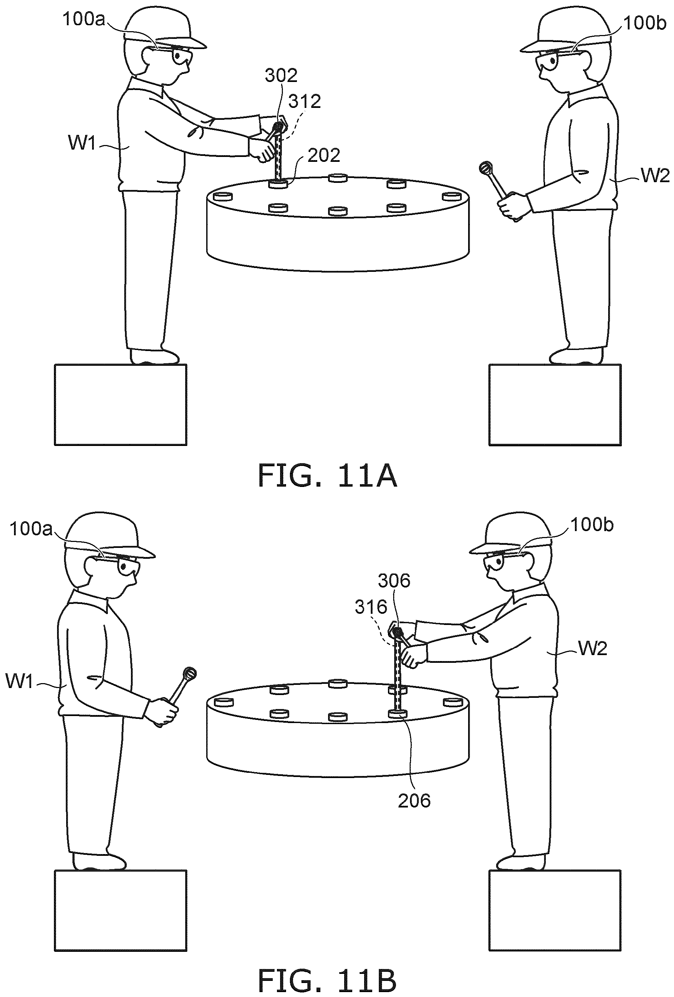

FIGS. 10A, 10B, 11A, and 11B are schematic views showing an alternating task.

In the alternating task, multiple workers alternately turn screws at the fastening locations. In the alternating task, the period in which one worker turns a screw and the period in which another worker turns a screw do not overlap.

As an example, screws are turned in the order of the fastening location 201, the fastening location 205, the fastening location 202, the fastening location 206, the fastening location 203, the fastening location 207, the fastening location 204, and the fastening location 208. In such a case, first, as shown in FIG. 10A, the MR device 100a displays the virtual objects 301 and 311 at the fastening location 201. The MR device 100b does not display the virtual objects 301 and 311. The worker W1 turns the screw at the fastening location 201 according to the display of the MR device 100a. When the hand or tool of the worker W1 contacts the virtual object 301, the MR device 100a determines that the task is performed at the fastening location 201.

The MR device 100a transmits the determination result related to the fastening location 201 to the MR device 100b. When it is determined that the screw has been turned at the fastening location 201, the MR device 100b displays the virtual objects 305 and 315 at the fastening location 205 as shown in FIG. 10B. The MR device 100a does not display the virtual objects 305 and 315. The worker W2 turns the screw at the fastening location 205 according to the display of the MR device 100b. Based on the contact between the hand of the worker W2 and the virtual object 305, the MR device 100b determines that the screw is being turned at the fastening location 205.

Similarly thereafter, the task by the worker W1 and the task by the worker W2 are alternately performed. When the MR device 100a receives the determination result related to the fastening location 205, the MR device 100a displays the virtual objects 302 and 312 at the fastening location 202 as shown in FIG. 11A. Subsequently, when the MR device 100b receives the determination result related to the fastening location 202, the MR device 100b displays the virtual objects 306 and 316 at the fastening location 206 as shown in FIG. 11B.

In the alternating task, the display of the MR device 100a and the display of the MR device 100b guide the workers W1 and W2 to alternately turn the screws of the article 200. In the illustrated example, the workers W1 and W2 are guided to alternately turn the screws at opposite positions of the article 200.

The fastening location at which the virtual object is initially displayed may be determined according to the position of the worker. Or, the sequence for the fastening locations may be preset. In such a case, the MR device 100 displays the virtual objects at the fastening locations according to the set sequence.

In the alternating task, one of the MR device 100a or 100b may notify the state of the task of the wearer of the other of the MR device 100a or 100b by using a display, a voice, a vibration, etc. For example, when task completion is determined for the MR device 100a, the determination result is transmitted to the MR device 100b. When receiving the determination result, the MR device 100b notifies the worker W2 of the task completion of the wearer (the worker W1) of the MR device 100a.

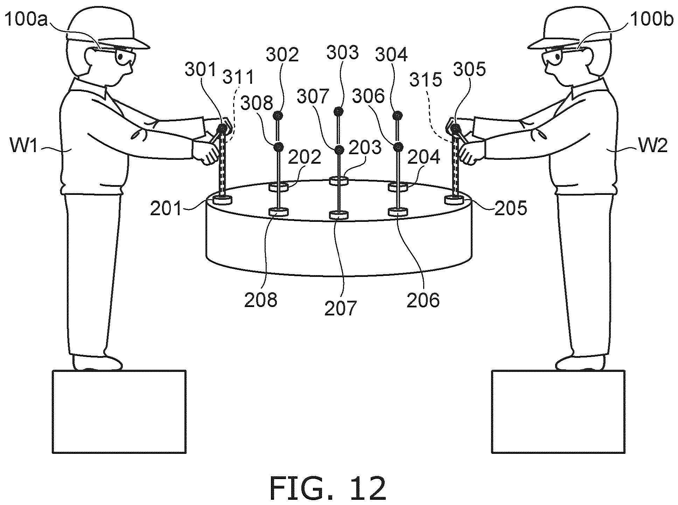

FIG. 12 is a schematic view showing an arbitrary task.

In the arbitrary task, multiple workers turn screws at any fastening location. The arbitrary task is performed when it is unnecessary to simultaneously perform the tasks at two or more fastening locations, when the sequence of the fastening locations at which the tasks are performed is not specified, etc.

In the arbitrary task, the MR devices 100a and 100b display the virtual objects 301 to 308 and 311 to 318 at the fastening locations 201 to 208 as shown in FIG. 12. For example, the workers W1 and W2 each can visually recognize the virtual objects 301 to 308 and 311 to 318. The workers W1 and W2 turn the screws at the fastening locations 201 to 208 according to the displays of the virtual objects 301 to 308 and 311 to 318.

The priority of the task at each fastening location may be preset. In such a case, the MR device 100 sequentially displays virtual objects at the fastening locations according to the priorities.

After the display of the virtual object, the display of the virtual object corresponding to the fastening location may change or disappear when the screw is turned at the fastening location. As a result, the workers can easily ascertain the fastening locations of the screws that are not yet turned.

When the screw is turned multiple times at one fastening location, the display of the virtual object may be changed according to the number of times. For example, the color, shape, size, etc., of the virtual object changes according to the number of times. As a result, the workers can easily ascertain the number of times that the screw is turned at each fastening location.

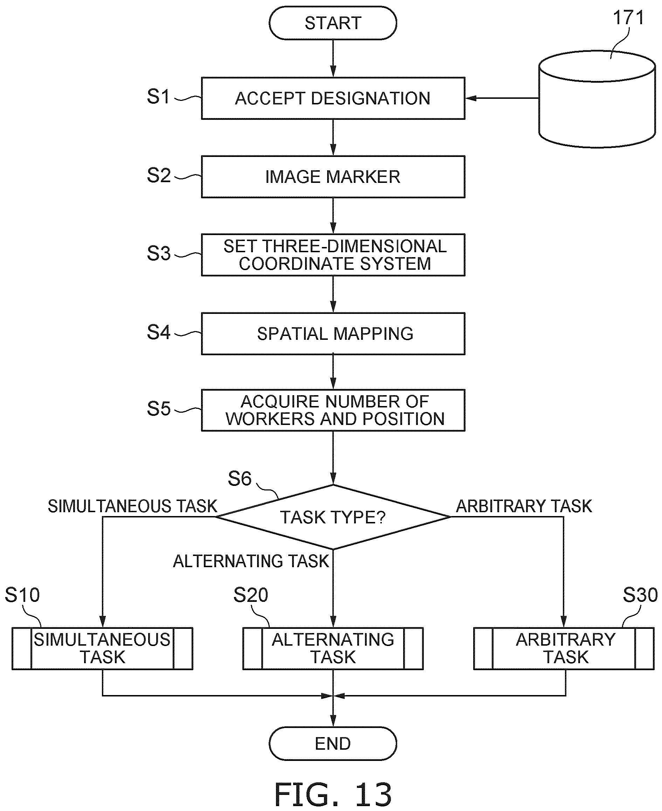

FIG. 13 is a flowchart showing a processing method according to the embodiment.

In the processing method shown in FIG. 13, the MR device 100 accepts a designation of the MR devices used in the task, the workers performing the task, the task to be performed, the tools to be used, etc. (step S1). The designation may be input by a worker, or may be input by a higher-level computer, etc. The workers, tools, etc., may be automatically designated according to a pre-generated schedule. Information such as the MR devices, the workers, the task, the tools, etc., may be associated with each other. For example, the MR devices are pre-associated with the workers. The task is pre-associated with the workers and the tools. In such a case, it is sufficient to designate one of the task, the worker, or the MR device. When the designation is accepted, the MR device 100 reads task data 171 and acquires data related to the designated object. The task data 171 includes the ID of the MR device, the ID of the worker, the proficiency of the worker, the ID of the task, the ID of the tool, etc.

When starting the task, the image camera 131 images the marker 210 (step S2). The MR device 100 recognizes the marker 210 based on the image and sets a three-dimensional coordinate system by using the marker 210 as the origin (step S3). The MR device 100 performs spatial mapping to acquire a spatial map (step S4). In the spatial map, surfaces of objects in the surrounding area of the MR device 100 are represented by meshes. The spatial map includes the coordinates of the meshes.

The MR device 100 acquires the number of workers designated in step S1, and the position of the MR device 100 worn by each worker (step S5). The position of the MR device 100 is calculated when the MR device 100 performs the spatial mapping. The MR devices 100 that collaborate with each other appropriately communicate their own positions.

The MR device 100 determines whether the type of the designated task is a simultaneous task, an alternating task, or an arbitrary task (step S6). The simultaneous task (step S10), the alternating task (step S20), or the arbitrary task (step S30) is performed according to the determination result of step S6.

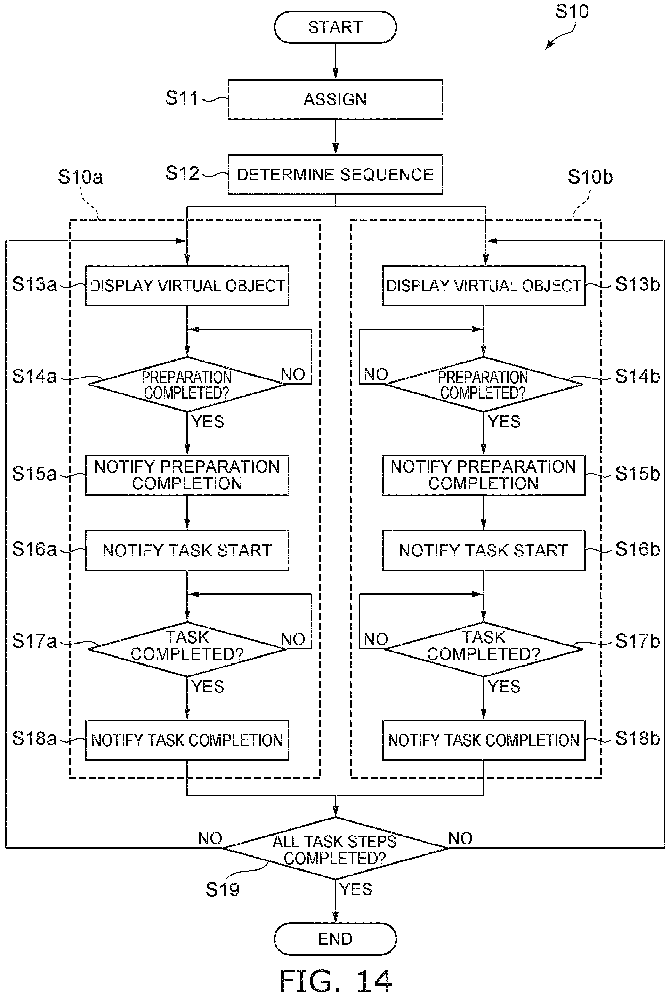

FIG. 14 is a flowchart showing a control method of the mixed reality devices in the simultaneous task.

In the simultaneous task (step S10), first, the MR device 100 assigns the fastening locations of the task for each worker (step S11). The MR device 100 determines the task sequence for the assigned fastening locations for each worker (step S12). When the sequence is prespecified, the MR device 100 determines the task sequence to be the prespecified sequence. When the priority is set for each fastening location, the sequence is determined so that the task is performed in order from the fastening locations having higher priorities. The result of the assignment and the sequence of the task are shared between the MR device 100a and the MR device 100b.

Subsequently, the processing of step S10a is performed by the MR device 100a. The processing of step SlOb is performed by the MR device 100b. Specifically, in step S10a, the MR device 100a displays the virtual object at the fastening location at which the task is to be performed (step S13a). The MR device 100a determines whether or not the task prepared by the worker W1 and the task prepared by the worker W2 are completed (step S14a). For example, when the hand or tool of the worker contacts the displayed virtual object, the preparation of the worker is determined to be completed. The determination result of step S14a is shared between the MR device 100a and the MR device 100b.

When the preparation is determined to be completed, the MR device 100a notifies the worker W1 that the preparations of the workers are completed (step S15a). Then, the MR device 100a notifies the worker W1 of the start of the task (step S16a). The worker W1 starts the task according to the notification.

The MR device 100a determines whether or not both the task of the worker W1 and the task of the worker W2 are completed (step S17a). For example, the MR device 100a determines the task to be completed when the necessary torque is transmitted from the tool. The determination result of step S17a is shared between the MR device 100a and the MR device 100b.

When the task of the worker W1 and the task of the worker W2 are determined to be completed, the MR device 100a notifies the worker W1 that the task is completed (step S18a). The MR device 100a determines whether or not all of the task steps included in the designated task are completed (step S19). The screw is turned at one fastening location in one task step. When a fastening location at which the screw is to be turned still remains, the virtual object is displayed at the remaining fastening location (step S13a).

The processing by the MR device 100b is similar to the processing by the MR device 100a. In other words, the MR device 100b displays the virtual object (step S13b). The MR device 100b determines whether or not the task preparations by the workers W1 and W2 are completed (step S14b). The determination result of step S14b is shared between the MR device 100a and the MR device 100b.

When the preparations are determined to be completed, the MR device 100b notifies the worker W2 that the preparations of the workers are completed (step S15b). The MR device 100b notifies the worker W2 of the start of the task (step S16b). The MR device 100b determines whether or not the task of the workers W1 and W2 is completed (step S17b). The determination result of step S17b is shared between the MR device 100a and the MR device 100b.

When the task is determined to be completed, the MR device 100b notifies the worker W2 that the task is completed (step S18b). The MR device 100b determines whether or not all of the steps included in the designated task are completed (step S19). When a fastening location at which the screw is to be turned still remains, the virtual object is displayed at the remaining fastening location (step S13b).

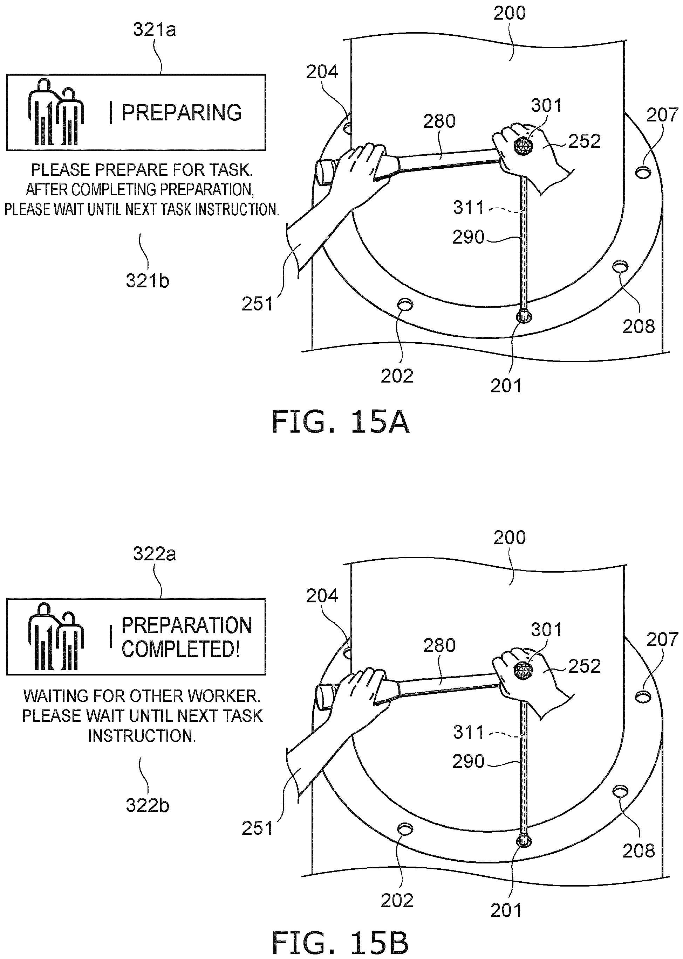

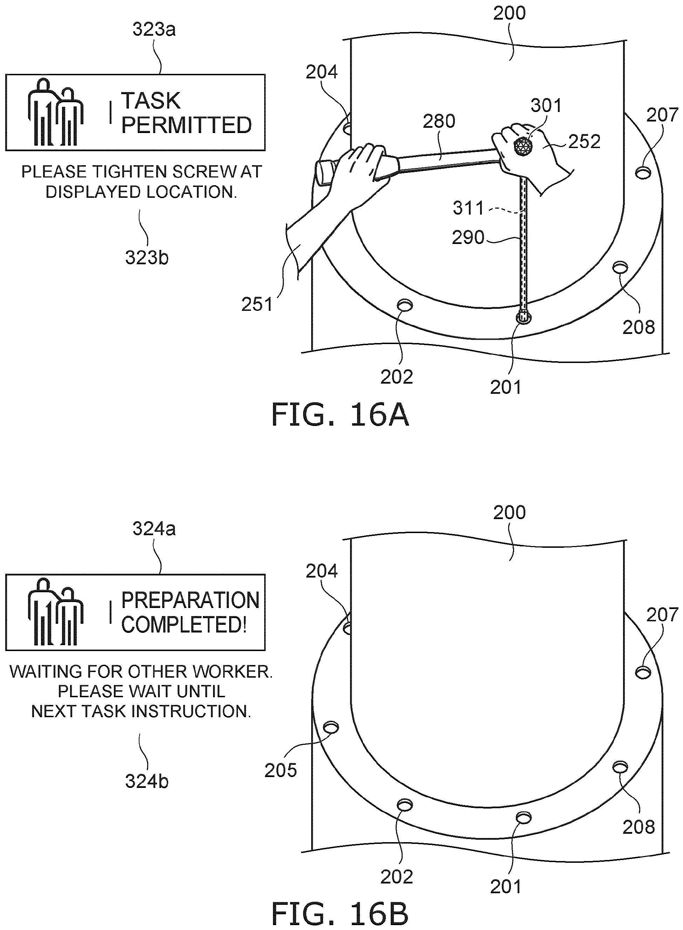

FIGS. 15A, 15B, 16A, and 16B are schematic views showing output examples from the mixed reality device in the simultaneous task.

The MR device 100a may display messages 321a and 321b as shown in FIG. 15A from the display of the virtual object in step S13a until the determination that the preparation is completed. The message 321a notifies the determined state of the worker W1 and indicates that the worker W1 is preparing for the task. The message 321b instructs the worker W1 to prepare for the task.

The MR device 100a may display messages 322a and 322b as shown in FIG. 15B from the completion of the preparation by the worker W1 until the preparation by the worker W2 is completed. The message 322a notifies the determined state of the worker W1 and indicates that the preparation by the worker W1 is completed. The message 322b includes an instruction to the worker W1. The message 322b instructs the worker W1 to wait because the preparation by the worker W2 is incomplete.

When the preparations by the workers W1 and W2 are completed, the MR device 100a may display messages 323a and 323b as shown in FIG. 16A. The message 323a notifies the worker W1 that the task is permitted. The message 323b instructs the worker W1 to start the task.

The MR device 100a may display messages 324a and 324b as shown in FIG. 16B from the completion of the task of the worker W1 until the completion of the task of the worker W2. The message 324a notifies the determined state of the worker W1 and indicates that the task of the worker W1 is completed. The message 324b instructs the worker W1 to wait until the task of the worker W2 is completed.

The MR device 100b also may display messages similar to FIGS. 15A to 16B according to the state of the worker W1 and the state of the worker W2. The MR devices 100a and 100b appropriately notify the state of the worker W1 and the state of the worker W2 and output instructions to the workers W1 and W2. As a result, the workers W1 and W2 can efficiently perform the task.

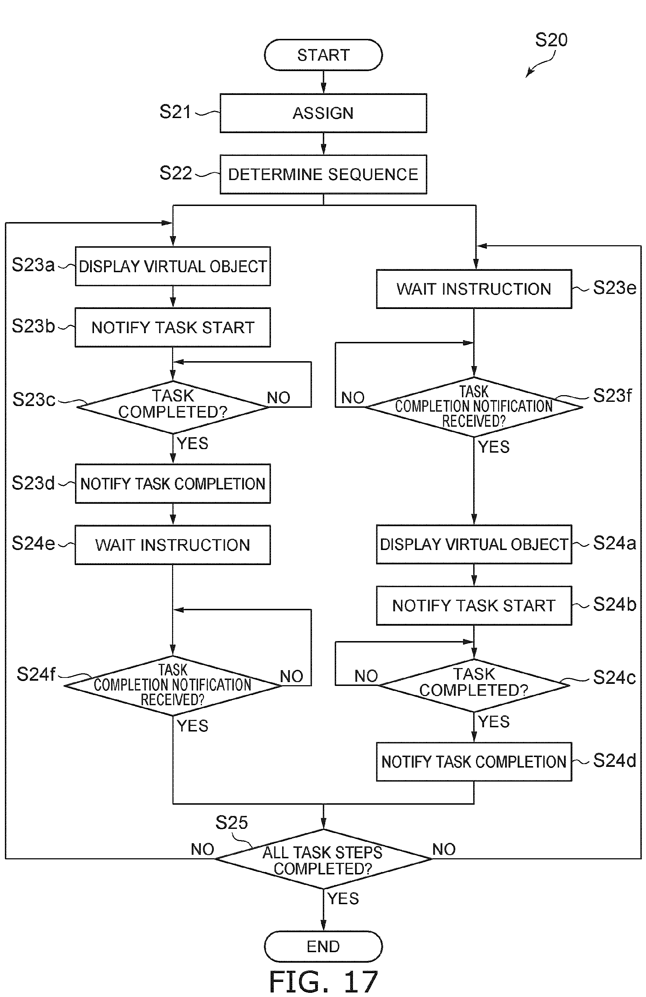

FIG. 17 is a flowchart showing a control method of the mixed reality devices in the alternating task.

In the alternating task (step S20), first, the MR device 100 assigns the fastening locations of the task for each worker (step S21). The MR device 100 determines the sequence of the task at the assigned fastening locations for each worker (step S22). When the sequence is prespecified, the MR device 100 determines the sequence of the task to be the prespecified sequence. When the priority is set for each fastening location, the sequence is determined so that the task is performed in order from the fastening locations having higher priorities. The result of the assignment and the sequence of the task are shared between the MR device 100a and the MR device 100b.

Here, an example will be described in which the task is started from the worker W1 wearing the MR device 100a. The MR device 100a displays the virtual object at the fastening location at which the task is to be performed (step S23a). The MR device 100a notifies the worker W1 of the task start (step S23b). The MR device 100a determines whether or not the task of the worker W1 is completed (step S23c). For example, the MR device 100a determines the task to be completed when the necessary torque is transmitted from the tool after the hand or the tool contacts the virtual object. When the task of the worker W1 is determined to be completed, the MR device 100a notifies the worker W1 that the task is completed (step S23d). Also, the MR device 100a notifies the MR device 100b that the task is completed.

During the task of the worker W1, the MR device 100b outputs a wait instruction to the worker W2 (step S23e). The MR device 100b determines whether or not the notification of the task completion is received from the MR device 100a (step S23f).

When the MR device 100b receives the notification of the task completion, the MR device 100b displays the virtual object at the fastening location at which the task is to be performed (step S24a). The MR device 100b notifies the worker W2 of the task start (step S24b). The MR device 100b determines whether or not the task of the worker W2 is completed (step S24c). When the task of the worker W2 is determined to be completed, the MR device 100b notifies the worker W2 that the task is completed (step S24d). Also, the MR device 100b notifies the MR device 100a that the task is completed.

During the task of the worker W2, the MR device 100a outputs a wait instruction to the worker W1 (step S24e). The MR device 100a determines whether or not the notification of the task completion is received from the MR device 100b (step S24f).

In steps S23a to S23f and steps S24a to S24f, the workers W1 and W2 take turns turning the screws at two fastening locations. When the task of the worker W2 is completed, the MR devices 100a and 100b determine whether or not all task steps included in the designated task are completed (step S25). When a fastening location at which the screw is to be turned still remains, the virtual object is displayed at the remaining fastening location (step S23a). By alternately performing steps S23a to S23f and steps S24a to S24f, the screws are alternately turned at the fastening locations.

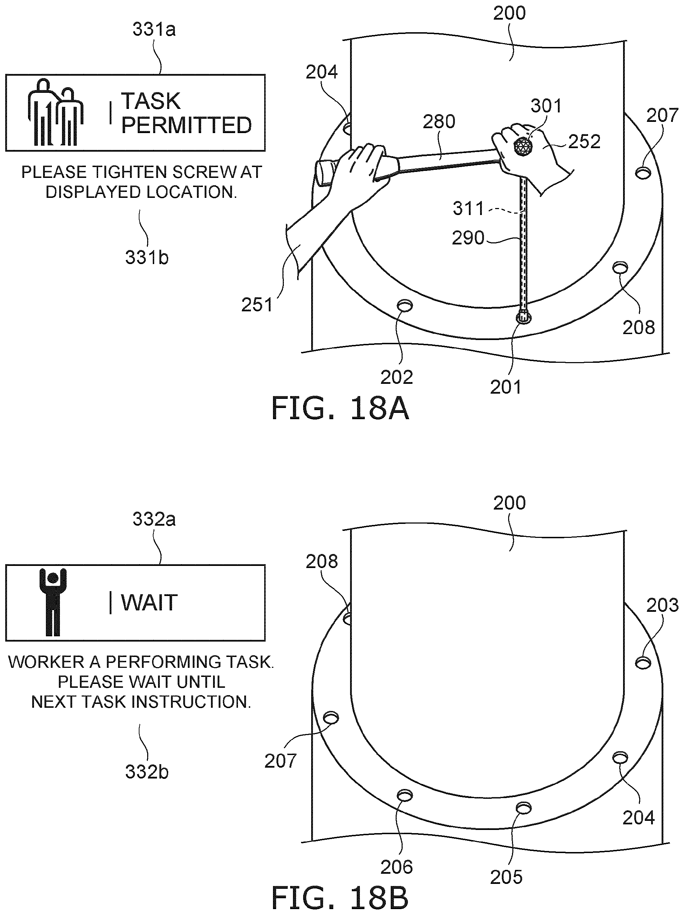

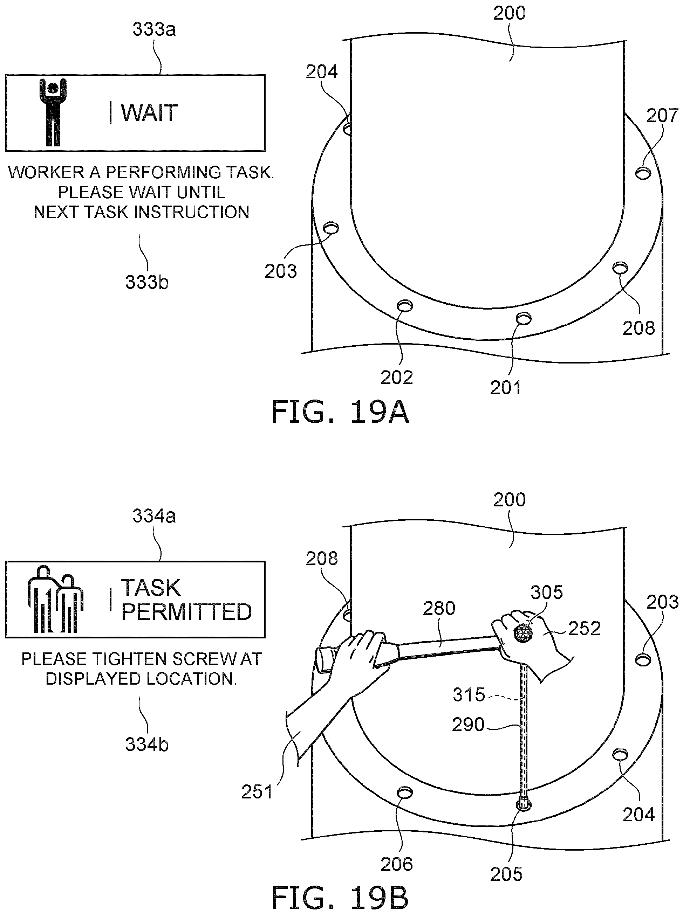

FIGS. 18A, 18B, 19A, and 19B are schematic views showing output examples from the mixed reality device in the alternating task.

The MR device 100a may display messages 331a and 331b as shown in FIG. 18A from the display of the virtual object in step S23a until the determination that the task is completed. The message 331a notifies the worker W1 that the task is permitted. The message 331b instructs the worker W1 to start the task.

During the task of the worker W1, the MR device 100b may display messages 332a and 332b as shown in FIG. 18B. The message 332a indicates the state of the worker W2. The message 332b instructs the worker W2 to wait until the task of the worker W1 is completed.

The MR device 100a may display messages 333a and 333b as shown in FIG. 19A after the task of the worker W1 is completed and the task of the worker W2 is started. The message 333a indicates the state of the worker W1. The message 333b instructs the worker W1 to wait until the task of the worker W2 is completed.

The MR device 100b may display messages 334a and 334b as shown in FIG. 19B from the display of the virtual object in step S24a until the determination that the task is completed. The message 334a notifies the worker W2 that the task is permitted. The message 334b instructs the worker W2 to start the task.

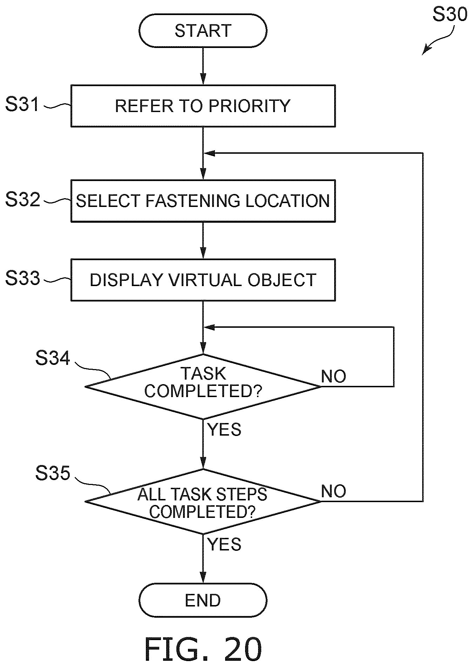

FIG. 20 is a flowchart showing a control method of the mixed reality devices in the arbitrary task.

In the arbitrary task (step S30), the processing by the MR device 100a and the processing by the MR device 100b are common. First, the MR device 100 refers to the priorities of the fastening locations (step S31). The MR device 100 selects the fastening location having the highest priority among the fastening locations at which the screws are not yet turned (step S32). The MR device 100 displays the virtual object at the selected fastening location (step S33). In the arbitrary task, the task is possible at the fastening locations by either the worker W1 or the worker W2. The MR device 100 determines whether or not the task is completed at the selected fastening locations (step S34). The result of the determination is shared between the MR device 100a and the MR device 100b.

The MR device 100 determines whether or not all task steps included in the designated task are completed (step S35). When a fastening location at which the screw is to be turned still remains, step S32 is re-performed. Steps S31 and S32 are omitted when priorities are not set for the fastening locations. In such a case, in step S33, the virtual objects are displayed at all of the fastening locations at which the screws are to be turned.

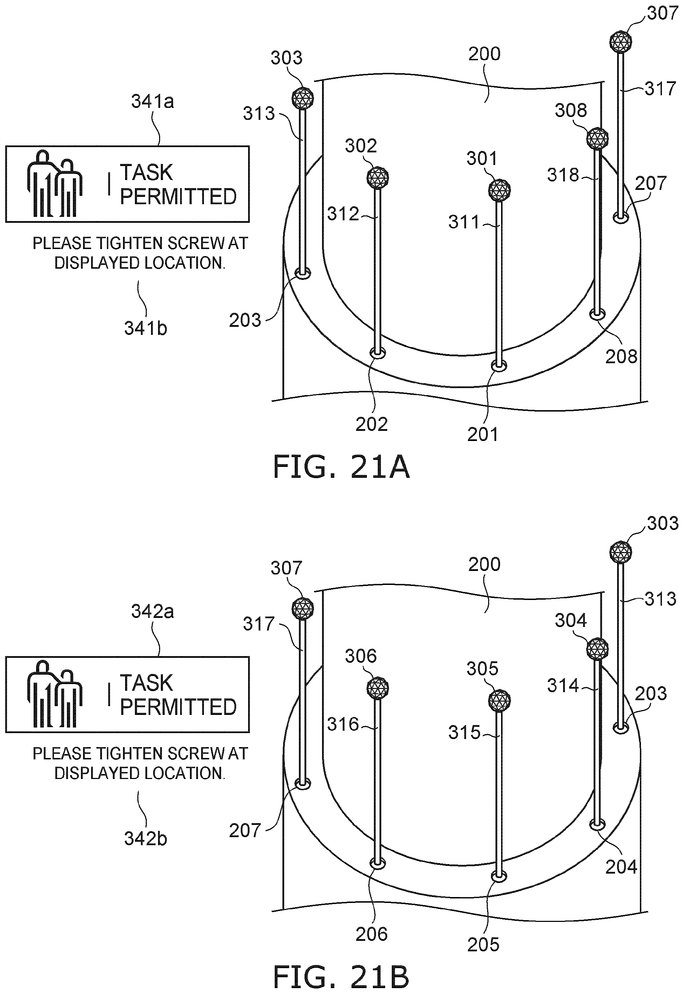

FIGS. 21A and 21B are schematic views showing output examples from the mixed reality device in the arbitrary task.

The MR device 100a may display messages 341a and 341b as shown in FIG. 21A after the virtual objects are displayed in step S33. The MR device 100b may display messages 342a and 342b as shown in FIG. 21B. The messages 341a and 342a respectively notify the workers W1 and W2 that the task is permitted. The messages 341b and 342b respectively instruct the workers W1 and W2 to start the task.

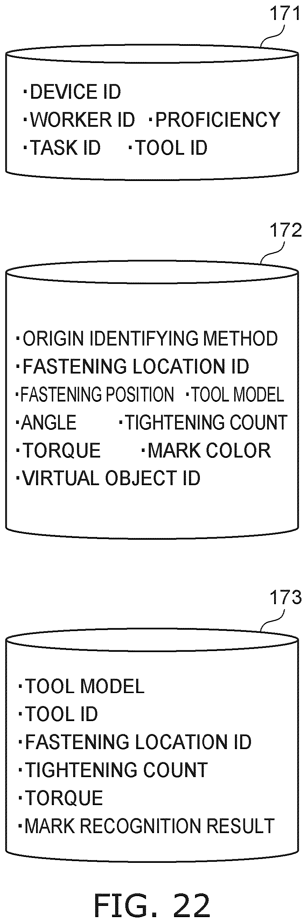

FIG. 22 is a schematic view illustrating data used according to the embodiment.

For example, as shown in FIG. 22, the storage device 170 stores the task data 171, fastening location data 172, and history data 173. As described above, the task data 171 includes the ID of the MR device, the ID of the worker, the proficiency of the worker, the ID of the task, the ID of the tool, etc. The fastening location data 172 stores the method for identifying the origin, the ID of each fastening location, the position of each fastening location, the model of the tool to be used, the angle of the extension bar, the necessary tightening count, the necessary torque, the color of the mark, and the ID of each virtual object.

A method that uses a marker, a method that uses a hand gesture, etc., are registered as the method for identifying the origin. The ID of the fastening location is a unique character string for identifying each fastening location. The coordinate in the three-dimensional coordinate system based on the origin is registered as the position of the fastening location. The model of the tool indicates the classification of the tool by structure, exterior shape, performance, etc. For example, the length of the extension bar is designated based on the model of the extension bar. The angle is the limit of the angle of the extension bar that can engage the screw when the screw is turned at the fastening location.

In the task, there are cases where a mark is made when the screw is turned at the fastening location. "Mark color" refers to the color of the mark provided at each fastening location. When the screw is marked with different colors according to the number of times that the screw is turned, the color of the mark for the number of times is registered. The virtual object ID is a character string for identifying the data of the preregistered virtual object; and the virtual object ID is associated with each fastening location.

The MR device 100 can display the virtual objects at the fastening locations by referring to the data stored in the fastening location data 172.

The history data 173 stores the task record. When the task is being performed, the MR device 100 associates the torque detected by the tool with the ID of the fastening location at which the screw is determined to be turned, and stores the torque in the history data 173. As shown in FIG. 22, the MR device 100 also may associate the model and ID of the tool used, the screw-tightening count, and the recognition result of the mark with the ID of the fastening location. The mark is detected by the processing device 150 based on the image that is imaged by the image camera 131. The processing device 150 extracts an aggregate of pixels of the mark color from the image and counts the number of pixels in the aggregate. When the number of pixels is greater than a preset threshold, a mark is determined to be present.

When the task location is determined in the simultaneous task, the alternating task, or the arbitrary task, the MR device 100 stores the data in the history data 173. The task record is automatically generated thereby.

The task data 171, the fastening location data 172, and the history data 173 are stored in the storage device 170 of the MR device 100. Or, the task data 171, the fastening location data 172, and the history data 173 may be stored in a memory region other than the MR device 100. In such a case, the MR device 100 accesses the task data 171, the fastening location data 172, and the history data 173 via wireless communication or a network.

Advantages of the embodiment will now be described.

When turning screws at multiple fastening locations, there are cases where the timing of the task or the sequence of the task is prespecified. In such a case, rework of the task becomes necessary if the timing of the task or the sequence of the task is mistaken. In particular, it is difficult and requires time and effort to mutually confirm the timing of the task or the sequence of the task when multiple workers collaborate to turn the screws. For example, when one worker cannot view the other worker, it is difficult to confirm the timing of the task or the sequence of the task. When the work site is noisy, it is difficult for the workers to confirm the timing or the sequence by voice.

According to the embodiment, in the simultaneous task as shown in FIG. 9A, the MR device 100a (a first mixed reality device) displays the virtual object 301 (a first virtual object) at the fastening location 201 (a first fastening location). The MR device 100b (a second mixed reality device) displays the virtual object 305 (a second virtual object) or the fastening location 205 (a second fastening location). When it is determined that the screws are turned respectively at the fastening locations 201 and 205, the MR device 100a displays the virtual object 302 (a third virtual object) at the fastening location 202 (a third fastening location), and the MR device 100b displays the virtual object 306 (a fourth virtual object) at the fastening location 206 (a fourth fastening location), as shown in FIG. 9B.

According to this method, the MR devices 100a and 100b display the virtual objects at the fastening locations at which the task is to be performed simultaneously. By performing the task according to the displays of the MR devices 100a and 100b, the workers W1 and W2 can perform the task at the prescribed timing at the multiple fastening locations.

According to the embodiment, in the alternating task as shown in FIG. 10A, the MR device 100a displays the virtual object 301 at the fastening location 201. When it is determined that the screw has been turned at the fastening location 201, the MR device 100b displays the virtual object 305 at the fastening location 205 as shown in FIG. 10B. When it is determined that the screw has been turned at the fastening location 205, the MR device 100a displays the virtual object 302 at the fastening location 202 as shown in FIG. 11A.

According to this method, the MR devices 100a and 100b display the virtual objects at the fastening locations at which the task is to be performed alternately. By performing the task according to the displays of the MR devices 100a and 100b, the workers W1 and W2 can perform the task in the prescribed sequence for the multiple fastening locations.

According to the embodiment, multiple workers can be efficiently supported to perform the task at the prescribed timing or in the prescribed sequence for the multiple fastening locations.

During the task, it is favorable to notify information from the MR device 100 as shown in FIGS. 15A to 16B and FIGS. 18A to 19B. The notified information indicates the state of the task of the wearer of the other MR device 100. It is favorable to provide notification of instructions related to the task from the MR device 100. By being notified of the information or instruction from the MR device 100, the worker can perform the task more efficiently.

During the task, it is favorable for the MR device 100 to automatically generate the task record. For example, when the screw is determined to be turned at the fastening location, the MR device 100 associates the torque detected by the tool with the data related to the first fastening location. As a result, it is unnecessary for the worker to generate the task record. The burden on the worker can be reduced. Also, mistakes by the worker when generating the record can be avoided.

The examples described above mainly describe a screw being tightened at a fastening location. Embodiments of the invention are applicable not only when a screw is tightened at a fastening location, but also when a screw is loosened at a fastening location. For example, a screw is loosened at a fastening location when performing maintenance, inspection, or repair of a product. According to embodiments of the invention, virtual objects are displayed by the mixed reality devices at the prescribed timing or in the prescribed sequence when loosening the screw. As a result, the multiple workers can be efficiently supported to perform the task at the prescribed timing or in the prescribed sequence for the multiple fastening locations.

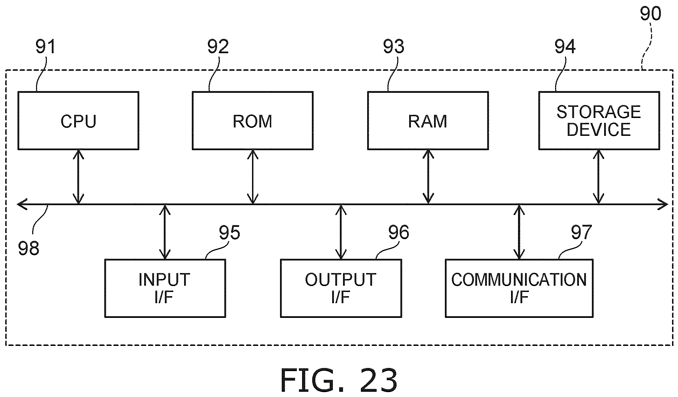

FIG. 23 is a schematic view showing a hardware configuration.

The MR device 100 includes, for example, a computer 90 shown in FIG. 23 as the processing device 150. The computer 90 includes a CPU 91, ROM 92, RAM 93, a storage device 94, an input interface 95, an output interface 96, and a communication interface 97.

The ROM 92 stores programs controlling operations of the computer 90. The ROM 92 stores programs necessary for causing the computer 90 to realize the processing described above. The RAM 93 functions as a memory region into which the programs stored in the ROM 92 are loaded.

The CPU 91 includes a processing circuit. The CPU 91 uses the RAM 93 as work memory and executes the programs stored in at least one of the ROM 92 or the storage device 94. When executing the programs, the CPU 91 executes various processing by controlling configurations via a system bus 98.

The storage device 94 stores data necessary for executing the programs and/or data obtained by executing the programs. The storage device 94 includes a solid state drive (SSD), etc. The storage device 94 may be used as the storage device 170.

The input interface (I/F) 95 can connect the computer 90 with an input device. The CPU 91 can read various data from the input device via the input I/F 95. The output interface (I/F) 96 can connect the computer 90 and an output device. The CPU 91 can transmit data to the output device (e.g., the projection devices 121 and 122) via the output I/F 96, and can cause the output device to display information.

The communication interface (I/F) 97 can connect the computer 90 and a device outside the computer 90. For example, the communication I/F 97 connects a digital tool and the computer 90 by Bluetooth (registered trademark) communication.

The data processing performed by the processing device 150 may be performed by only one computer 90. A part of the data processing may be performed by a server or the like via the communication I/F 97.

Processing of various types of data described above may be recorded, as a program that can be executed by a computer, on a magnetic disk (examples of which include a flexible disk and a hard disk), an optical disk (examples of which include a CD-ROM, a CD-R, a CD-RW, a DVD-ROM, a DVD±R, and DVD±RW), a semiconductor memory, or another non-transitory computer-readable storage medium.

For example, information recorded on a recording medium can be read by a computer (or an embedded system). The recording medium can have any record format (storage format). For example, the computer reads a program from the recording medium and causes the CPU to execute instructions described in the program, on the basis of the program. The computer may obtain (or read) the program through a network.

Embodiments of the invention include the following features.

### Feature 1

A control method, including:
causing a first mixed reality device to display a first virtual object at a first fastening location;
causing a second mixed reality device to display a second virtual object at a second fastening location; and
when a screw is determined to have been turned at the first fastening location and a screw is determined to have been turned at the second fastening location, causing the first mixed reality device to display a third virtual object at a third fastening location, and causing the second mixed reality device to display a fourth virtual object at a fourth fastening location.

### Feature 2

A control method, including:
causing a first mixed reality device to display a first virtual object at a first fastening location;
when a screw is determined to have been turned at the first fastening location, causing a second mixed reality device to display a second virtual object at a second fastening location; and
when a screw is determined to have been turned at the second fastening location, causing the first mixed reality device to display a third virtual object at a third fastening location.

### Feature 3

The method according to feature 1 or 2, further including:
causing the first mixed reality device and the second mixed reality device to set a three-dimensional coordinate system having a marker located in a real space as an origin; and
causing the first mixed reality device and the second mixed reality device to display virtual objects at preset coordinates in the three-dimensional coordinate system.

### Feature 4

The method according to any one of features 1 to 3, further including:
causing the first mixed reality device to display information of a state of a task performed by a wearer of the second mixed reality device.

### Feature 5

The method according to feature 4, further including:
causing the second mixed reality device to display information of a state of a task performed by a wearer of the first mixed reality device.

### Feature 6

The method according to any one of features 1 to 5, in which
the first mixed reality device determines that the screw has been turned at the first fastening location when a torque that is greater than a threshold is detected by a tool turning the screw in a state in which a prescribed object contacts the first virtual object.

### Feature 7

The method according to feature 6, further including:
when it is determined that the screw has been turned at the first fastening location, causing the first mixed reality device to associate the torque detected by the tool with data related to the first fastening location.

### Feature 8

A mixed reality system, including:
the first mixed reality device and the second mixed reality device,
the mixed reality system causing the first mixed reality device and the second mixed reality device to perform the control method according to any one of features 1 to 7.

### Feature 9

A mixed reality device, configured to:
display a virtual space to overlap a real space;
display a first virtual object at a first fastening location at which a screw is to be turned; and
after the display of the first virtual object, display a third virtual object at a third fastening location when the screw is determined to have been turned at the first fastening location and when a screw is determined to have been turned at a second fastening location by another mixed reality device.

### Feature 10

A program, when executed by a mixed reality device configured to display a virtual space to overlap a real space, causing the mixed reality device to:
display a first virtual object at a first fastening location at which a screw is to be turned; and
after the display of the first virtual object, display a third virtual object at a third fastening location when the screw is determined to have been turned at the first fastening location and a screw is determined to have been turned at a second fastening location by another mixed reality device.

### Feature 11

A non-transitory computer-readable storage medium configured to store the program according to feature 10.

According to the embodiments above, a control method, a mixed reality system, a mixed reality device, a program, and a storage medium are provided in which multiple workers can be supported to perform a task at a prescribed timing or in a prescribed sequence for multiple fastening locations.

In the specification, "or" shows that "at least one" of items listed in the sentence can be adopted.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention. Moreover, above-mentioned embodiments can be combined mutually and can be carried out.

## Claims

1. A control method, comprising:
causing a first mixed reality device (100a) to display a first virtual object (301) at a first fastening location (201);
causing a second mixed reality device (100b) to display a second virtual object (305) at a second fastening location (205); and
when a screw is determined to have been turned at the first fastening location and a screw is determined to have been turned at the second fastening location, causing the first mixed reality device to display a third virtual object (302) at a third fastening location (312), and causing the second mixed reality device to display a fourth virtual object (306) at a fourth fastening location (206).

2. A control method, comprising:
causing a first mixed reality device (100a) to display a first virtual object (301) at a first fastening location (201);
when a screw is determined to have been turned at the first fastening location, causing a second mixed reality device (100b) to display a second virtual object (305) at a second fastening location (205); and
when a screw is determined to have been turned at the second fastening location, causing the first mixed reality device to display a third virtual object (302) at a third fastening location (202).

3. The method according to claim 1 or 2, further comprising:
causing the first mixed reality device (100a) and the second mixed reality device (100b) to set a three-dimensional coordinate system having a marker (210) located in a real space as an origin; and
causing the first mixed reality device and the second mixed reality device to display virtual objects (301 to 308) at preset coordinates in the three-dimensional coordinate system.

4. The method according to any one of claims 1 to 3, further comprising:
causing the first mixed reality device (100a) to display information (333b) of a state of a task performed by a wearer of the second mixed reality device (100b).

5. The method according to claim 4, further comprising:
causing the second mixed reality device (100b) to display information (332b) of a state of a task performed by a wearer of the first mixed reality device (100a).

6. The method according to any one of claims 1 to 5, wherein
the first mixed reality device (100a) determines that the screw has been turned at the first fastening location (201) when a torque that is greater than a threshold is detected by a tool (280) turning the screw in a state in which a prescribed object contacts the first virtual object (301).

7. The method according to claim 6, further comprising:
when it is determined that the screw has been turned at the first fastening location (201), causing the first mixed reality device (100a) to associate the torque detected by the tool (280) with data related to the first fastening location.

8. A mixed reality system (1), comprising:
the first mixed reality device (100a) and the second mixed reality device (100b),
the mixed reality system causing the first mixed reality device and the second mixed reality device to perform the control method according to any one of claims 1 to 7.

9. A mixed reality device (100a), configured to:
display a virtual space to overlap a real space;
display a first virtual object (301) at a first fastening location (201) at which a screw is to be turned; and
after the display of the first virtual object, display a third virtual object (302) at a third fastening location (202) when the screw is determined to have been turned at the first fastening location and when a screw is determined to have been turned at a second fastening location (205) by another mixed reality device (100b).

10. A non-transitory computer-readable storage medium configured to store a program,
the program, when executed by a mixed reality device (100a) configured to display a virtual space to overlap a real space, causing the mixed reality device to:
display a first virtual object (301) at a first fastening location (201) at which a screw is to be turned; and
after the display of the first virtual object, display a third virtual object (302) at a third fastening location (202) when the screw is determined to have been turned at the first fastening location and a screw is determined to have been turned at a second fastening location (305) by another mixed reality device (100b).
